# FASCICULE DE BREVET EUROPEEN

(11) **EP 2 291 980 B1**
(45) Date de publication et mention de la délivrance du brevet: **23.05.2012**
(21) Numéro de dépôt: 09784422.9
(22) Date de dépôt: 23.06.2009
(51) Int. Cl.: H04L 29/06, H04L 29/12

(54) **ACCES RESEAU A DISTANCE VIA UN RESEAU VISITE**
FERNZUGRIFF AUF EIN NETZWERK ÜBER EIN BESUCHTES NETZWERK
REMOTE NETWORK ACCESS VIA A VISITED NETWORK

(30) Priorité: 24.06.2008 FR 0854186
(43) Date de publication de la demande: 09.03.2011
(73) Titulaire: France Telecom, 75015 Paris (FR)
(72) Inventeur: LE BER, Erwan, F-22300 Lannion (FR); HEMON, Philippe, F-22730 Tregastel (FR)
(74) Mandataire: Cabinet Plasseraud
(86) Numéro de dépôt international: PCT/FR2009/051197
(87) Numéro de publication internationale: WO 2010/007289

(56) Documents cités:
- US-A1- 2006 236 388
- US-A1- 2007 081 519
- US-A1- 2007 143 488
- US-A1- 2007 168 458
- STAPP M ET AL: "Resolution of Fully Qualified Domain Name (FQDN) Conflicts among Dynamic Host Configuration Protocol (DHCP) Clients; RFC 4703" INTERNET ENGINEERING TASK FORCE, IETF, 1 octobre 2006 (2006-10-01), XP015048675

## Description

La présente invention est relative au domaine de l'accès à un réseau, et plus particulièrement de l'accès à un réseau à distance.

Des réseaux résidentiels, ou encore réseaux domestiques (ou 'home network' en anglais), permettent à des terminaux d'avoir accès à des services qui sont offerts dans ce réseau. Il peut être intéressant d'offrir les services du réseau domestique à ce même terminal, lorsque ce dernier n'est pas localisé dans le réseau domestique.

Certaines architectures réseaux permettent à ce terminal d'accéder à son réseau domestique via un réseau distant. Ce type d'architecture offre une flexibilité géographique d'accès au réseau domestique pour un terminal afin de lui permettre de disposer des services concernés même s'il n'est pas localisé dans ce réseau domestique.

Pour permettre à un terminal, localisé à distance de son réseau domestique, d'accéder à un service de voix sur IP offert dans ce réseau domestique, il peut être prévu de mettre en place un enregistrement du terminal auprès d'un serveur géré par un opérateur fournisseur du service considéré. Au cours de cet enregistrement, le terminal récupère des données de configuration sur la base desquelles il est ensuite en mesure de s'authentifier et de s'enregistrer pour requérir un établissement d'appel voix sur IP auprès d'une plateforme spécifique gérée elle aussi par un opérateur.

Dans un tel contexte, non seulement l'accès au service de voix sur IP requiert la mise en relation du terminal avec un serveur en premier lieu, puis avec une plateforme en second lieu, mais en outre il peut être complexe de gérer l'appel voix sur IP au niveau de la plateforme considérée dans une telle architecture.

La demande de brevet américain US 2007/0168458 A1 divulgue un procédé de gestion d'accès à distance pour un terminal à un réseau domestique via Internet, le réseau domestique étant relié à Internet par un dispositif de passerelle. Cette passerelle autorise l'accès du terminal distante sur la base des informations d'accès indiquées dans une requête d'accès.

La présente invention vise à améliorer la situation.

Un premier aspect de la présente invention propose un procédé de gestion d'accès à distance pour un terminal à un premier réseau via un second réseau ;
ledit premier réseau étant relié au second réseau via un équipement réseau ; ledit procédé comprenant les étapes suivantes, mises en oeuvre au niveau de l'équipement réseau :
/1/ recevoir, dudit terminal via le second réseau, une requête d'accès au premier réseau indiquant des informations d'accès ;
/2/ décider si le terminal est autorisé à accéder au premier réseau sur la base desdites informations d'accès ; et
/3/ émettre, à destination du terminal via le second réseau, un message indiquant si le terminal est autorisé à accéder au premier réseau, ledit procédé étant remarquable en ce que lesdites informations d'accès comprennent un premier paramètre correspondant à une adresse MAC du terminal et un second paramètre correspondant à une clé WEP de la passerelle.

En procédant ainsi, il est possible d'offrir à un terminal un accès à distance à un réseau auquel il est préalablement enregistré, via un autre réseau, de manière simple et efficace, puisque les informations d'accès dont le terminal et l'équipement réseau ont besoin pour l'autorisation d'accès à distance au premier réseau selon l'invention sont récupérées classiquement au moment de l'enregistrement de ce terminal auprès du premier réseau.

On peut prévoir que l'enregistrement préalable du terminal auprès de l'équipement réseau soit effectué selon un protocole de type SIP (pour 'Session Initiation Protocol' en anglais).

Grâce à de telles dispositions, le terminal peut disposer de manière aisée d'informations d'accès sur la base desquelles il peut accéder à distance aux services offerts dans le premier réseau, c'est-à-dire le réseau auquel il est préalablement enregistré.

En outre, cet accès à distance est sécurisé sur la base desdites informations d'accès.

Dans une telle architecture, l'autorisation d'accès à distance peut être effectuée de manière simple et efficace.

Dans un mode de réalisation de la présente invention, l'équipement réseau offre un service dans le premier réseau, et offre également ledit service via le second réseau au terminal qui est autorisé à un accès à distance au premier réseau.

Ici, l'équipement réseau auprès duquel le terminal requiert une autorisation d'accès à distance au premier réseau correspond également à l'équipement qui fournit le service dans le premier réseau. Il en résulte que le terminal, une fois autorisé à accéder au premier réseau via un second réseau, pourra utiliser le service à distance dans des conditions similaires à celles qu'il aurait s'il était situé dans le premier réseau, localement.

Le premier réseau peut correspondre à un réseau domestique et l'équipement réseau considéré ici peut correspondre à une passerelle domestique. Toutefois, aucune limitation n'est attachée aux caractéristiques de ce premier réseau ni à celles de la passerelle. Ainsi, on peut également prévoir notamment que le premier réseau correspond à un réseau d'entreprise. La passerelle est alors adaptée pour relier un réseau public et ce réseau d'entreprise.

Ainsi, grâce à ces dispositions, la fourniture d'informations d'accès permettant à un terminal d'accéder à distance au premier réseau, le contrôle d'accès à distance de ce terminal lors d'une tentative d'accès au premier réseau via le second réseau, et la fourniture du service sont réalisés au niveau d'un même équipement réseau dans le premier réseau, selon un mode de réalisation de la présente invention.

Ces caractéristiques permettent de simplifier à la fois l'architecture et la mise en oeuvre d'un tel procédé de gestion. En effet, le terminal est finalement relié au même équipement réseau, qu'il ait accédé au premier réseau de manière locale, ou bien qu'il ait un accès à distance selon un mode de réalisation de la présente invention.

Ainsi, fournir le service visé au terminal qui est dans son réseau domestique, c'est-à-dire le premier réseau pour lequel le terminal a un accès local et auquel il s'est préalablement enregistré, ou encore au terminal qui est dans un réseau distant peut avantageusement être géré de manière similaire au niveau de l'équipement de réseau considéré selon un mode de réalisation de la présente invention.

Le service considéré peut correspondre à une communication voix sur IP. Dans ce cas, l'équipement réseau établit une communication VoIP selon le protocole SIP (pour 'Session Initiation Protocol') pour le terminal autorisé à accéder à distance au premier réseau.

Ici, l'établissement d'une communication VoIP peut donc être mis en oeuvre à distance comme en local selon les mêmes principes.

L'équipement réseau peut gérer une liste associant des informations d'accès respectives à chaque terminal enregistré. Dans ce cas, à l'étape /2/, l'équipement réseau peut décider que le terminal est autorisé à accéder au premier réseau lorsque les informations d'accès indiquées dans la requête d'accès à distance correspondent aux informations d'accès associées audit terminal dans ladite liste.

Les informations d'accès ont été échangées au cours d'un enregistrement en local du terminal auprès de l'équipement réseau. Ainsi, une telle gestion de liste au niveau de l'équipement réseau permet de garantir un niveau de sécurité d'accès à distance au regard du premier réseau.

Les informations d'accès associées à un terminal comprennent un premier paramètre indiquant une adresse MAC (pour 'Medium Access Control') dudit terminal et un second paramètre indiquant une clé WEP (pour 'Wired Equivalent Privacy') de l'équipement réseau. Ce type de premier paramètre reçu du terminal par l'équipement réseau au moment de l'enregistrement en local du terminal correspond avantageusement à un paramètre d'authentification permettant de sécuriser l'accès à distance au premier réseau.

Dans un mode de réalisation de la présente invention, l'adresse MAC du terminal est stockée au niveau de l'équipement réseau, lors du premier enregistrement auprès de ce dernier. Il peut être prévu que le terminal reçoive la clé WEP lors d'une manipulation manuelle effectuée au niveau du terminal par exemple par l'utilisateur. En effet, cette information peut correspondre à un paramètre de configuration du terminal fourni par l'utilisateur, lors de son premier accès, par exemple WIFI. Toutefois, aucune limitation n'est attachée au moyen utilisé pour informer le terminal de cette clé WEP de l'équipement réseau considéré. On peut également envisager que cette information soit reçue depuis un autre équipement.

Il convient de noter que le terminal, lorsqu'il n'est pas situé dans le premier réseau, souhaite obtenir une adresse pour contacter l'équipement réseau du premier réseau. Afin qu'il puisse obtenir cette adresse, le terminal peut mettre en oeuvre un quelconque mécanisme et aucune limitation n'est attachée à la présente invention au regard du mécanisme utilisé à cet effet.

On peut notamment prévoir que l'équipement réseau s'enregistre auprès d'un serveur DNS (pour 'Domain Name System') en transmettant une requête d'enregistrement indiquant au moins une adresse MAC de l'équipement réseau.

Dans un mode de réalisation, une telle requête d'enregistrement, depuis l'équipement réseau considéré, auprès d'un serveur DNS indique un nom de domaine qui est représentatif du service consistant à offrir un accès à distance à un terminal. Ce nom de domaine comprend alors un champ indiquant l'adresse MAC de l'équipement réseau. Dans un tel contexte, le serveur DNS peut aisément rediriger de telles requêtes d'enregistrement vers un serveur dédié sur la base du nom de domaine, en fonction de l'adresse MAC indiquée dans le premier champ. Ce serveur dédié associe alors l'adresse IP de l'équipement réseau à son adresse MAC.

Ainsi, le serveur DNS considéré est en mesure de gérer une association entre une adresse IP et une adresse MAC de chaque équipement réseau enregistré auprès de lui. En procédant ainsi, le terminal qui a l'adresse MAC de l'équipement réseau est en mesure d'obtenir ultérieurement l'adresse IP de cet équipement sur le principe d'une résolution d'adresse de type DNS en se basant sur l'utilisation de ce serveur DNS.

Un deuxième aspect de la présente invention propose un procédé comprenant les étapes suivantes, mises en oeuvre au niveau du terminal :
/1/ émettre, à destination de l'équipement réseau via le second réseau, une requête d'accès à distance indiquant les informations d'accès ; et
/2/ recevoir, depuis l'équipement réseau via le second réseau, un message indiquant si le terminal est autorisé à accéder à distance au premier réseau.

Grâce à ces dispositions, le terminal préalablement enregistré auprès de l'équipement réseau du premier réseau peut avoir accès à distance à ce premier réseau via un second réseau.

Les informations d'accès comprennent un premier paramètre indiquant une adresse MAC dudit terminal et un second paramètre indiquant une clé WEP de l'équipement réseau.

Afin de pouvoir contacter l'équipement réseau à distance, le terminal connaît une adresse de cet équipement réseau. Ainsi, par exemple, si le second réseau est un réseau IP, le terminal souhaitant requérir un accès à distance au premier réseau connait l'adresse IP de l'équipement réseau.

La présente invention couvre tous les mécanismes permettant au terminal d'obtenir une adresse de l'équipement réseau du premier réseau accessible via le second réseau.

On peut par exemple prévoir que le terminal connaît une adresse MAC de l'équipement réseau et que, avant l'étape /1/, les étapes suivantes sont mises en oeuvre au niveau du terminal :
/i/ émettre à destination d'une plateforme DNS une requête d'adresse indiquant une adresse MAC de l'équipement réseau ;
/ii/ recevoir une réponse indiquant une adresse IP de l'équipement réseau.

Dans un mode de réalisation de la présente invention, on peut prévoir qu'à partir de cette plateforme DNS, est accessible une association entre une adresse IP et une adresse MAC de l'équipement réseau considéré. Dans ce contexte, le terminal récupère l'adresse IP de l'équipement réseau considéré à partir de l'adresse MAC de cet équipement auprès de cette plateforme DNS.

Plus précisément, le terminal peut connaître un nom de domaine qui est associé au service d'accès à distance dans un mode de réalisation de la présente invention. Ce nom de domaine peut être connu du terminal au moment de la première connexion à l'équipement réseau effectuée dans le premier réseau, en local, en utilisant une option de DHCP (pour 'Dynamic Host Configuration Protocol' en anglais). Aucune limitation n'est attachée à la présente invention au regard de la méthode utilisée pour que le terminal connaisse le nom de domaine correspondant.

Ainsi, à l'étape /i/, le terminal peut émettre une requête d'adresse qui indique le nom de domaine considéré ainsi que l'adresse MAC de l'équipement réseau recherché. En procédant ainsi, on est en mesure, au niveau de la plateforme DNS, de transférer ce type de requête vers un ou plusieurs serveurs dédiés à la gestion d'adresse pour ce service d'accès à distance selon un mode de réalisation de la présente invention.

Il convient de noter que dans une architecture selon un mode de réalisation de la présente invention, il est possible d'offrir avantageusement un accès à distance sécurisé au premier réseau via le second réseau, sans qu'aucune adaptation n'ait été réalisée dans ce second réseau. L'offre de cet accès sécurisé à distance est de ce fait aisée à mettre en oeuvre.

Un troisième aspect de la présente invention propose un équipement réseau adapté pour mettre en oeuvre un procédé de gestion d'accès à distance selon le premier aspect de la présente invention.

Un quatrième aspect de la présente invention propose un terminal adapté pour mettre en oeuvre un procédé de gestion d'accès à distance selon le deuxième aspect de la présente invention.

Un cinquième de la présente invention propose un système de gestion d'accès à distance à un premier réseau via un second réseau pour un terminal selon le quatrième aspect de la présente invention, un équipement réseau selon le troisième aspect de la présente invention reliant le premier réseau au second réseau.

Un sixième aspect de la présente invention propose un programme d'ordinateur, destiné à être stocké dans une mémoire d'un équipement réseau selon le troisième aspect de la présente invention, ou sur un support mémoire amovible et destiné à coopérer avec un lecteur dudit équipement réseau, ledit programme d'ordinateur comprenant des instructions pour la mise en oeuvre de tout ou partie des étapes du procédé selon le premier aspect de la présente invention.

Un septième aspect de la présente invention propose un programme d'ordinateur, destiné à être stocké dans une mémoire d'un terminal selon le quatrième aspect de la présente invention, ou sur un support mémoire amovible et destiné à coopérer avec un lecteur dudit terminal, ledit programme d'ordinateur comprenant des instructions pour la mise en oeuvre de tout ou partie des étapes du procédé selon le deuxième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une architecture réseau selon un mode de réalisation de la présente invention ;
- la figure 2 illustre les principales étapes d'un procédé de gestion d'accès à distance selon un mode de réalisation de l'invention ;
- la figure 3 illustre un échange protocolaire pour l'établissement d'une communication voix sur IP dans une architecture selon un mode de réalisation de la présente invention ;
- la figure 4 illustre un échange de message mis en oeuvre selon un mode de réalisation de la présente invention pour obtenir une adresse de l'équipement réseau au niveau d'un terminal ; et
- la figure 5 illustre une architecture d'un équipement réseau selon un mode de réalisation de la présente invention.

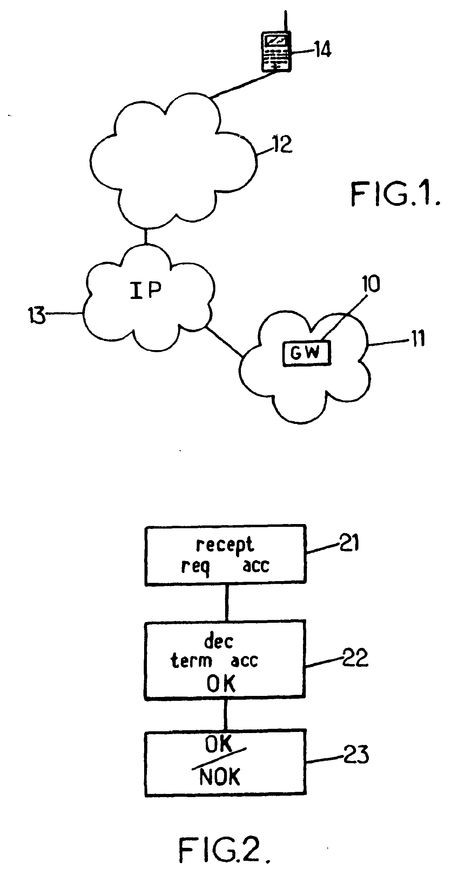

La figure 1 illustre une architecture réseau selon un mode de réalisation de la présente invention. Un premier réseau 11 comprend un équipement réseau 10. Ce premier réseau peut, par exemple, être un réseau domestique ou 'home network', ou encore un réseau d'entreprise. Cet équipement réseau 10 correspond par la suite à une passerelle 10. Cette passerelle 10 est adaptée pour fournir un service dans ce premier réseau 11 de manière locale à des terminaux appartenant à ce premier réseau. Elle est en outre adaptée pour relier ce premier réseau 11 à un réseau extérieur, un second réseau 13. A titre illustratif, le second réseau 13 est un réseau IP.

Aucune limitation n'est attachée à la méthode utilisée par le terminal 14 pour se relier au réseau IP 13. On peut prévoir, comme illustré sur cette figure 1, que le terminal 14 est relié au réseau IP 13 par un autre réseau domestique 12, ou encore par un quelconque point d'accès au réseau 13. On peut aussi prévoir que le réseau 12 est un réseau de type réseau cellulaire.

Un terminal 14 est un terminal appartenant au premier réseau 11. On entend ici par les termes 'terminal appartenant à un réseau', un terminal qui peut accéder à ce réseau en local et bénéficier de services offerts dans ce réseau. En général, un terminal s'est au préalable enregistré auprès de ce réseau. Le terminal 14 est donc ici préalablement enregistré dans le premier réseau pour bénéficier localement de services offerts dans ce réseau.

Selon un mode de réalisation de la présente invention, le terminal 14 peut avoir accès au premier réseau 11 via le second réseau 13.

Aucune limitation n'est attachée au type de terminal au regard de la présente invention. Ainsi, le terminal 14 peut être par exemple un terminal Wi-Fi SIP, et dans ce cas il peut accéder au premier réseau 11 à distance via un point d'accès Wi-Fi, ou encore un terminal bi-mode à la fois présentant les caractéristiques d'un terminal WiFi-SIP et celles d'un terminal GSM, et dans ce cas, le terminal 14 peut accès à distance au réseau 11 en se reliant au réseau 12 qui peut être un réseau de type GSM, puis via le réseau 13 IP.

La figure 2 illustre les principales étapes du procédé de gestion d'accès à distance selon un mode de réalisation de la présente invention. A ce stade, le terminal s'est préalablement enregistré auprès du réseau 11 en local. Il appartient donc à ce premier réseau 11 et à ce titre peut bénéficier de services offerts dans ce réseau lorsqu'il est localement connecté à ce premier réseau 11. Au cours de cet enregistrement préalable auprès de la passerelle 10, le terminal fournit, ou met à jour, des informations d'accès qui lui permettront, le cas échéant ultérieurement, d'accéder au premier réseau à distance selon un mode de réalisation de la présente invention.

A une étape 21, l'équipement réseau 10, ou passerelle, reçoit un message de requête d'accès à distance au premier réseau depuis le terminal via le second réseau, indiquant les informations d'accès.

A une étape 22, l'équipement réseau 10 décide si le terminal est autorisé à accéder à distance au premier réseau sur la base des informations d'accès indiquées dans la requête d'accès.

Plus précisément, à cet effet, chaque terminal du premier réseau, souhaitant pouvoir avoir accès à distance à ce même réseau ultérieurement, peut fournir au cours de son enregistrement en local avec la passerelle 10, des informations d'accès. On peut prévoir que cette transmission d'informations d'accès entre le terminal 14 et la passerelle 10 est mise en oeuvre lors de tout enregistrement local, ou qu'elle n'est mise en oeuvre que lors d'un enregistrement spécifique qui requiert une utilisation du premier réseau à distance ultérieure éventuellement.

Dans ce dernier cas, la passerelle pourrait gérer deux types d'enregistrement, un premier type d'enregistrement qui correspond à un enregistrement local et un second type d'enregistrement qui correspond à la fois à un enregistrement local et à distance.

Plus précisément, au cours de ce second type d'enregistrement, dans un mode de réalisation, les informations d'accès transmises du terminal vers la passerelle sont une première information correspondant à une adresse physique du terminal et une seconde information correspondant à une clé secrète de la passerelle. Ces première et seconde informations peuvent être respectivement une adresse MAC du terminal, et une clé de type clé WEP (pour 'Wired Equivalent Privacy') de la passerelle. Toutefois, aucune limitation n'est attachée au type de ces informations d'accès au regard de la présente invention.

On peut prévoir de configurer manuellement la clé WEP sur le terminal.

Ces informations d'accès sont respectivement stockées à la fois du côté du terminal et du côté de la passerelle de sorte à être accessibles ultérieurement par ces deux éléments. La passerelle 10 peut ainsi maintenir une liste d'association dans laquelle les informations d'accès relatives à un terminal sont stockées en association à ce terminal. Cette liste reste accessible par la passerelle afin de lui permettre ultérieurement, lors d'une requête d'accès à distance au premier réseau, de vérifier si ce terminal peut être autorisé à faire cet accès. En effet, d'un côté, la requête d'accès à distance indique ces informations d'accès et, d'un autre côté, ces informations sont accessibles via la liste.

En procédant ainsi, on garantit un niveau élevé de sécurité quant à l'utilisation à distance du premier réseau.

Ensuite, à une étape 23, la passerelle informe le terminal de sa décision d'accepter ou non sa requête d'accès à distance au premier réseau. A cet effet, elle émet un message indiquant cette décision.

Par la suite, la présente invention est décrite dans son application aux réseaux domestiques ou 'home network' et au service voix sur IP, ou VoIP pour 'Voice over IP' offert dans un tel réseau. Cette application est uniquement illustrative et ne limite en rien la mise en oeuvre de la présente invention dans le cadre d'autres applications.

Dans ce contexte, le premier réseau 11 offre, via la passerelle 10, un service d'appel voix sur IP. Par conséquent, un terminal appartenant à ce premier réseau 11 et situé localement dans ce premier réseau peut requérir auprès de la passerelle l'établissement d'un appel voix sur IP auprès de la passerelle 10.

Selon un mode de réalisation, il est également prévu d'offrir un tel service d'appel voix sur IP au terminal 14 qui est situé à distance du premier réseau et qui a accès à ce premier réseau 11 via le second réseau 13.

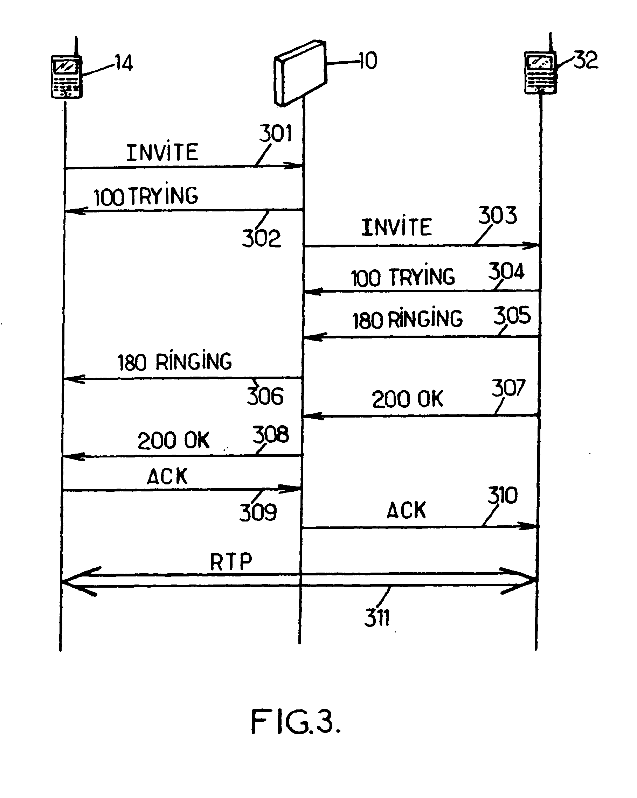

La figure 3 illustre un échange protocolaire selon le protocole SIP d'un établissement d'un appel voix sur IP dans un tel contexte. Cet échange protocolaire est mis en oeuvre après que les étapes 21 à 23 aient été effectuées et que l'accès à distance du terminal 14 au premier réseau 11 ait été accepté. A ce stade, le terminal localisé dans le second réseau 13 peut bénéficier des services offerts dans le premier réseau.

Dans le contexte illustratif de l'architecture réseau telle qu'illustrée par la figure 1, les messages échangés entre le terminal 14 et l'entité réseau 10 transitent ici via le réseau 12 puis via le second réseau IP 13 avant d'atteindre la passerelle 10, et réciproquement dans le sens de transmission inverse.

Ainsi, le terminal ayant reçu une réponse positive à sa requête d'accès à distance au premier réseau provenant de la passerelle 10, peut ensuite émettre un message d'initiation d'appel à destination de la passerelle, un message 'INVITE' 301 selon le protocole SIP. Sur réception de ce message 'INVITE' 301, la passerelle 10 émet d'une part à destination du terminal 14, le terminal appelant, un message '100 TRYING' 302 selon le protocole SIP, et, d'autre part, à destination d'un terminal appelé 32 un message 'INVITE' 303 selon le protocole SIP. Le message 302 correspond à une réponse au message 301 du terminal appelant 14 et le message 303 correspond à la transmission du message 301 jusqu'au terminal appelé 32.

Le terminal appelé 32 répond au message 'INVITE' 303 par l'envoi d'un message '100 TRYING' 304 selon le protocole SIP. Puis, il émet un message '180 RINGING' 305 selon le protocole SIP. Ce message 305 est reçu par la passerelle 10 et ensuite transmis au terminal appelant 14 sous la forme d'un message 306.

Puis, lorsque l'appel en cours d'établissement est répondu au niveau du terminal appelé 32, ce dernier émet un message '200 OK' 307 selon le protocole SIP.

Ce message 307 est ensuite transmis sous la forme d'un message '200 OK' 308 depuis la passerelle 10 jusqu'au terminal appelant 14. Ce dernier accuse ensuite bonne réception de cette réponse à l'appel en cours en émettant un message 'ACK' 309 selon le protocole SIP. Ce message est ensuite relayé jusqu'au terminal appelé 32 sous la forme d'un message 'ACK' 310.

A ce stade, une communication 311 VoIP est établie entre le terminal appelant 14 et le terminal appelé 32 selon le protocole RTP (pour 'Real Time Protocol').

Il convient de noter que le flux de messages de signalisation SIP précédant l'établissement de la communication 311 transite donc par la passerelle 10.

En revanche, les données, ou flux média, transitant au cours de la communication établie 311 ne transite pas nécessairement par la passerelle 10, et peuvent être directement transmis entre les terminaux 14 et 32. En effet, l'adresse de destination des flux média dans la communication 311 n'est pas modifiée selon un mode de réalisation de la présente invention.

Il est aisé de déduire des sections qui précèdent un échange protocolaire correspondant au fait que le terminal 14 reçoit un appel VoIP depuis le premier réseau alors qu'il a un accès à ce premier réseau à distance.

Grâce à ces dispositions, un utilisateur peut recevoir sur un terminal VoIP nomade, c'est-à-dire situé en dehors de son réseau domestique dans lequel il est enregistré, un appel initialement dirigé sur un numéro fixe VoIP du premier réseau 11, alors que le terminal VoIP n'est pas connecté directement à la passerelle 10 en local.

Il convient donc de noter que la mise en oeuvre du service localement ou à distance est similaire et reste gérée par la passerelle 10.

Lorsque le terminal est connecté au second réseau 13 par un point d'accès internet Wi-Fi par exemple, il est requis que ce terminal ait une adresse lui permettant de transmettre des messages à la passerelle 10.

Aucune limitation n'est attachée à la présente invention au regard du mécanisme mis en oeuvre pour récupérer cette adresse.

A cet effet, par exemple, on peut prévoir de mettre en oeuvre un mécanisme de résolution d'adresse IP spécifique, de type DNS (pour 'Domain Name System').

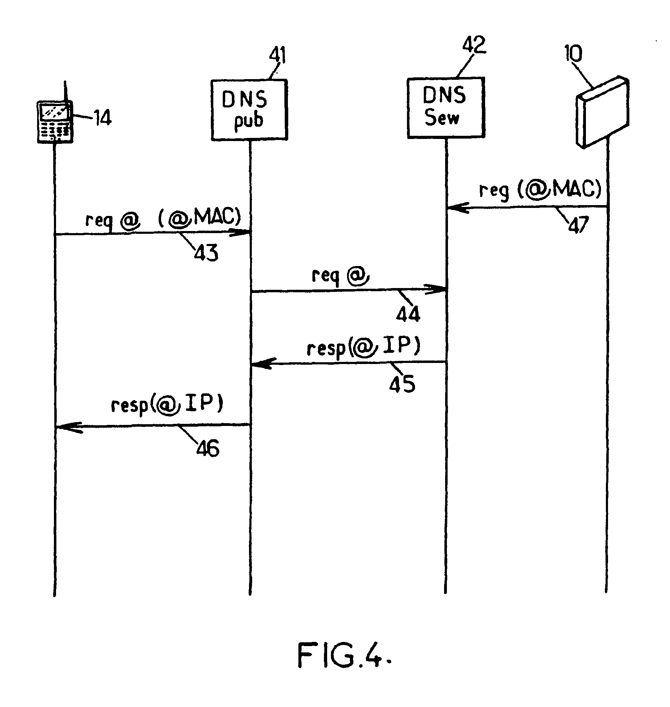

La figure 4 illustre un échange de messages relatifs à l'obtention d'une adresse de la passerelle 10 au niveau du terminal 14, lorsque ce dernier n'est plus localisé dans le premier réseau.

Une plateforme DNS 41 de résolution d'adresse IP publique est accessible au terminal 14 via le réseau IP 13. Le terminal 14 émet alors à destination de la plateforme DNS 41 une requête d'adresse 43. Cette dernière peut indiquer à la plateforme DNS un nom de domaine dans lequel est comprise une adresse MAC de la passerelle 10, ces informations ayant été par exemple récupérées lors de l'enregistrement préalable du terminal 14 dans le premier réseau effectué lorsque le terminal était localisé dans ce premier réseau.

Le terminal 14 émet donc une requête d'adresse 43 indiquant au sein du nom de domaine, l'adresse MAC de la passerelle 10. Dans un mode de réalisation de la présente invention, la plateforme DNS 41 route ce type de requête qui indique ce nom de domaine en direction d'un serveur DNS dédié. Ainsi, sur réception du message de requête 43, la plateforme DNS 41 transmet ce message sous la forme d'un message de requête d'adresse 44 à un serveur DNS 42.

Ce serveur DMS 42 a accès à une liste d'association d'adresse MAC et d'adresse IP pour les passerelles qui se sont enregistrées auprès de lui. Ainsi, on prévoit que la passerelle 10 s'est préalablement enregistrée auprès du serveur DNS 42 en lui transmettant un message d'enregistrement 47 indiquant son adresse MAC et son adresse IP.

Par conséquent, le serveur DNS 42 peut répondre au message 43 par la transmission d'un message 46 'resp(@IP)' qui indique au terminal l'adresse IP qu'il peut utiliser pour transmettre des messages à la passerelle 10.

Puis, les étapes 21 à 23 peuvent alors être mises en oeuvre selon un mode de réalisation de la présente invention.

Plus précisément, les mécanismes de type DNS proposent une option de redirection des requêtes provenant d'un domaine déterminé vers un serveur DNS. Ici, on peut prévoir que les requêtes d'adresse 43 émises par un terminal 14 à distance du premier réseau 11 indiquent un domaine spécifique, par exemple le domaine sip.service.com. Dans ce contexte, l'option peut avantageusement être utilisée de manière à transférer toutes les requêtes d'adresse indiquant un domaine mac.sip.service.com vers un serveur DNS dédié à ce service comme le serveur DNS 42.

Un tel serveur DNS connait l'adresse MAC et l'adresse IP de chaque passerelle (ou 'Home Gateway') qui s'est enregistrée pour le service d'accès à distance selon un mode de réalisation de la présente invention.

Grâce aux dispositions de la présente invention, l'architecture réseau permettant d'offrir un service de réseau domestique par accès à distance est simple et peut être mise en oeuvre à un coût faible. De surcroit, elle ne requiert pas de modification dans le réseau extérieur au réseau domestique, ou premier réseau.

Ces caractéristiques permettent à un abonné de recevoir les appels dirigés vers un numéro VoIP fixe du réseau domestique 11 tout en étant localisé ailleurs, et même tout en étant en déplacement. Tel est notamment le cas, lorsque le terminal 14 est un terminal Wi-Fi.

De manière réciproque, cet abonné peut également établir des appels en utilisant un numéro VoIP fixe alors qu'il n'est pas physiquement présent dans son réseau domestique.

Un abonné de ce type peut également appeler un terminal de son réseau domestique, donc son domicile, de manière similaire à un appel réalisé au sein du réseau domestique. Un tel appel peut donc être gratuit.

Il convient de noter qu'une architecture selon un mode de réalisation de la présente invention permet de faire converger les offres de communication fixe et les offres de communication mobile, sans requérir une modification du réseau mobile considéré.

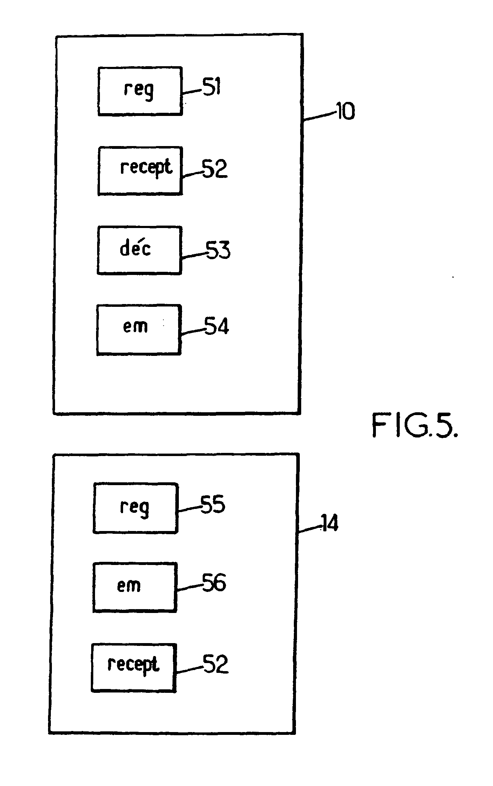

La figure 5 illustre une architecture d'un équipement réseau 10 et d'un terminal 14 selon un mode de réalisation de la présente invention.

Un tel équipement réseau peut comprendre :
- une unité d'enregistrement 51 adaptée pour enregistrer une adresse physique du terminal lorsque ledit terminal est dans le premier réseau ;
- une unité de réception 52 adaptée pour recevoir dudit terminal via le second réseau, une requête d'accès indiquant lesdites informations d'accès ;
- une unité de décision 53 adaptée pour décider si le terminal est autorisé à accéder au premier réseau sur la base desdites informations d'accès ; et
- une unité d'émission 54 adaptée pour émettre, à destination du terminal via le second réseau, un message indiquant si le terminal est autorisé à accéder au premier réseau,
lesdites informations d'accès comprenant un premier paramètre correspondant à ladite adresse physique du terminal et un second paramètre correspondant à une clé secrète de la passerelle.

Il peut comprendre en outre des moyens adaptés pour gérer une liste associant des informations d'accès respectives à chaque terminal enregistré ; l'unité de décision 53 décidant alors que le terminal est autorisé à accéder au premier réseau lorsque les informations d'accès indiquées dans la requête d'accès à distance correspondent aux informations d'accès associées audit terminal dans ladite liste.

En outre, l'unité d'enregistrement 51 peut être adaptée pour recevoir une information d'accès depuis le terminal 14 correspondant à une adresse MAC du terminal.

Le terminal 14 peut comprendre :
- une unité d'enregistrement 55 adaptée pour enregistrer le terminal auprès de l'équipement réseau lorsque le terminal est dans le premier réseau, en fournissant une adresse MAC du terminal ;
- une unité d'émission 56 adaptée pour émettre, à destination de l'équipement réseau via le second réseau, une requête d'accès à distance 31 indiquant lesdites informations d'accès ; et
- une unité de réception 57 adaptée pour recevoir, depuis l'équipement réseau via le second réseau, un message indiquant si le terminal est autorisé à accéder à distance au premier réseau.

L'unité d'émission 56 peut en outre être adaptée pour émettre à destination d'un serveur DNS 41 une requête d'adresse 43 indiquant l'adresse MAC de l'équipement réseau 10 ; et l'unité de réception peut être adaptée pour recevoir une réponse 46 indiquant une adresse IP de l'équipement réseau.

## Revendications

1. Procédé de gestion d'accès à distance pour un terminal (14) à un premier réseau (11) via un second réseau (13) ; ledit premier réseau étant relié au second réseau via un équipement réseau (10) ;
ledit procédé comprenant les étapes suivantes, mises en oeuvre au niveau de l'équipement réseau :
/1/ recevoir (21), du terminal via le second réseau, une requête d'accès à distance (31) au premier réseau indiquant des informations d'accès ;
/2/ décider si le terminal est autorisé à accéder à distance au premier réseau sur la base desdites informations d'accès ; et
/3/ émettre, à destination du terminal via le second réseau, un message indiquant si le terminal est autorisé à accéder à distance au premier réseau,
ledit procédé étant **caractérisé en ce que** lesdites informations d'accès comprennent un premier paramètre correspondant à une adresse MAC du terminal et un second paramètre correspondant à une clé WEP de l'équipement réseau (10).

2. Procédé de gestion d'accès à distance selon la revendication 1, dans lequel l'équipement réseau (10), offrant un service dans le premier réseau (11), offre ledit service via le second réseau (13) au terminal autorisé à accéder à distance au premier réseau.

3. Procédé de gestion d'accès à distance selon la revendication 1, dans lequel l'équipement réseau (10) gère une liste associant des informations d'accès respectives à chaque terminal enregistré ; et
dans lequel, à l'étape /2/, l'équipement réseau décide que le terminal est autorisé à accéder au premier réseau lorsque les informations d'accès indiquées dans la requête d'accès à distance correspondent aux informations d'accès associées audit terminal dans ladite liste.

4. Procédé de gestion d'accès à distance selon la revendication 1, dans lequel l'équipement réseau (10) s'enregistre auprès d'un serveur DNS en transmettant une requête d'enregistrement (43) indiquant une adresse MAC de l'équipement réseau.

5. Procédé de gestion d'accès à distance pour un terminal (14) à un premier réseau (11) via un second réseau (13) ;
ledit premier réseau étant relié au second réseau via un équipement réseau (10) ;
ledit procédé comprenant les étapes suivantes, mises en oeuvre au niveau du terminal :
/1/ émettre, à destination de l'équipement réseau via le second réseau, une requête d'accès à distance (31) indiquant des informations d'accès ; et
/2/ recevoir, depuis l'équipement réseau via le second réseau, un message indiquant si le terminal est autorisé à accéder à distance au premier réseau,
ledit procédé étant **caractérisé en ce que** lesdites informations d'accès comprennent un premier paramètre correspondant à une adresse MAC du terminal et un second paramètre correspondant à une clé WEP de l'équipement réseau (10).

6. Procédé de gestion d'accès à distance selon la revendication 5, dans lequel le terminal (14) a une adresse MAC de l'équipement réseau (10) ledit procédé de gestion comprenant, avant l'étape /1/, les étapes suivantes mises en oeuvre au niveau du terminal :
/i/ émettre à destination d'une plateforme DNS (41) une requête d'adresse (43) indiquant une adresse MAC de l'équipement réseau (10) ;
/ii/ recevoir une réponse (46) indiquant une adresse IP de l'équipement réseau.

7. Equipement réseau (10) dans un système de gestion d'accès à distance pour un terminal (14) à un premier réseau (11) via un second réseau (13) ;
ledit équipement réseau reliant ledit premier réseau au second réseau ;
ledit équipement réseau (10) comprenant :
- une unité d'enregistrement (51) adaptée pour enregistrer une adresse MAC du terminal lorsque ledit terminal est dans le premier réseau ;
- une unité de réception (52) adaptée pour recevoir (21), depuis ledit terminal via le second réseau, une requête d'accès (31) indiquant des informations d'accès ;
- une unité de décision (53) adaptée pour décider si le terminal est autorisé à accéder au premier réseau sur la base desdites informations d'accès ; et
- une unité d'émission (54) adaptée pour émettre, à destination du terminal via le second réseau, un message indiquant si le terminal est autorisé à accéder au premier réseau,
ledit équipement réseau étant **caractérisé en ce que** lesdites informations d'accès comprennent un premier paramètre correspondant à ladite adresse MAC du terminal et un second paramètre correspondant à une clé WEP de l'équipement réseau (10).

8. équipement réseau (10) selon la revendication 7, comprenant en outre des moyens adaptés pour gérer une liste associant des informations d'accès respectives à chaque terminal enregistré ; et
dans laquelle l'unité de décision (53) décide que le terminal est autorisé à accéder au premier réseau lorsque les informations d'accès indiquées dans la requête d'accès à distance correspondent aux informations d'accès associées audit terminal dans ladite liste.

9. Terminal (14) dans un système de gestion d'accès à distance à un premier réseau (11) via un second réseau (13) ;
ledit premier réseau étant relié au second réseau via un équipement réseau (10) ;
le terminal comprenant :
- une unité d'enregistrement (55) adaptée pour enregistrer le terminal auprès de l'équipement réseau lorsque le terminal est dans le premier réseau, en fournissant audit équipement réseau une adresse MAC du terminal ;
- une unité d'émission (56) adaptée pour émettre, à destination de l'équipement réseau via le second réseau, une requête d'accès à distance (31) indiquant des informations d'accès ; et
- une unité de réception (57) adaptée pour recevoir, depuis l'équipement réseau via le second réseau, un message indiquant si le terminal est autorisé à accéder à distance au premier réseau,
ledit terminal étant **caractérisé en ce que** lesdites informations d'accès comprennent un premier paramètre correspondant à ladite adresse MAC du terminal et un second paramètre correspondant à une clé WEP de l'équipement réseau (10).

10. Terminal (14) selon la revendication 9, dans lequel, le terminal a une adresse MAC de l'équipement réseau (10) ;
dans lequel l'unité d'émission est en outre adaptée pour émettre à destination d'une plateforme DNS (41) une requête d'adresse (43) indiquant l'adresse MAC de l'équipement réseau (10) ; et
dans lequel l'unité de réception est adaptée pour recevoir une réponse (46) indiquant une adresse IP de l'équipement réseau.

11. Système de gestion d'accès à distance à un premier réseau (11) via un second réseau (13) pour un terminal (14) selon la revendication 9 ;
ledit premier réseau étant relié au second réseau via un équipement réseau (10) selon la revendication 7.

12. Programme d'ordinateur, destiné à être stocké dans une mémoire d'un équipement réseau (10) selon la revendication 7, ou sur un support mémoire amovible et destiné à coopérer avec un lecteur dudit équipement réseau, ledit programme d'ordinateur comprenant des instructions pour la mise en oeuvre des étapes du procédé selon la revendication 1.

13. Programme d'ordinateur, destiné à être stocké dans une mémoire d'un terminal (14) selon la revendication 9, ou sur un support mémoire amovible et destiné à coopérer avec un lecteur dudit terminal, ledit programme d'ordinateur comprenant des instructions pour la mise en oeuvre des étapes du procédé selon la revendication 5.

## Claims

1. Method for managing remote access for a terminal (14) to a first network (11) via a second network (13); said first network being connected to the second network via an item of network equipment (10);
said method comprising the following steps applied at the item of network equipment:
1. receiving (21), from the terminal via the second network, a request for remote access (31) to the first network indicating access information;
2. deciding whether the terminal is authorized to remotely access the first network on the basis of said access information; and
3. transmitting, to the terminal via the second network, a message indicating whether the terminal is authorized to remotely access the first network,
said method being **characterized in that** said access information comprises a first parameter corresponding to an MAC address of the terminal and a second parameter corresponding to a WEP key of the item of network equipment (10).

2. Remote access management method according to Claim 1, wherein the item of network equipment (10), providing a service in the first network (11), provides said service via the second network (13) to the terminal authorized to remotely access the first network.

3. Remote access management method according to Claim 1, wherein the item of network equipment (10) manages a list linking respective items of access information to each registered terminal; and
wherein, in step 2, the item of network equipment decides that the terminal is authorized to access the first network when the access information indicated in the remote access request corresponds to the access information associated with said terminal in said list.

4. Remote access management method according to Claim 1, wherein the item of network equipment (10) registers with a DNS server by transmitting a registration request (43) indicating an MAC address of the item of network equipment.

5. Method for managing remote access for a terminal (14) to a first network (11) via a second network (13); said first network being connected to the second network via an item of network equipment (10);
said method comprising the following steps applied at the terminal:
1. transmitting, to the item of network equipment via the second network, a remote access request (31) indicating access information; and
2. receiving, from the item of network equipment via the second network, a message indicating whether the terminal is authorized to remotely access the first network,
said method being **characterized in that** said access information includes a first parameter corresponding to an MAC address of the terminal and a second parameter corresponding to a WEP key of the item of network equipment (10).

6. Remote access management method according to Claim 5, wherein the terminal (14) has an MAC address of the item of network equipment (10), said management method comprising, before step 1, the following steps applied at the terminal:
i. transmitting to a DNS platform (41) an address request (43) indicating an MAC address of the item of network equipment (10);
ii. receiving a response (46) indicating an IP address of the item of network equipment.

7. Item of network equipment (10) in a system for managing remote access for a terminal (14) to a first network (11) via a second network (13);
said item of network equipment connecting said first network to the second network;
said item of network equipment (10) comprising:
- a registration unit (51) suitable for registering an MAC address of the terminal when said terminal is in the first network;
- a reception unit (52) suitable for receiving (21), from said terminal via the second network, an access request (31) indicating access information;
- a decision unit (53) suitable for deciding whether the terminal is authorized to access the first network on the basis of said access information; and
- a transmission unit (54) suitable for transmitting, to the terminal via the second network, a message indicating whether the terminal is authorized to access the first network,
said item of network equipment being **characterized in that** said access information includes a first parameter corresponding to said MAC address of the terminal and a second parameter corresponding to a WEP key of the item of network equipment (10).

8. Item of network equipment (10) according to Claim 7, also comprising means suitable for managing a list linking respective items of access information to each registered terminal; and
in which the decision unit (53) decides that the terminal is authorized to access the first network when the items of access information indicated in the remote access request correspond to the items of access information associated with said terminal in said list.

9. Terminal (14) in a system for managing remote access to a first network (11) via a second network (13);
said first network being connected to the second network via an item of network equipment (10);
the terminal comprising:
- a registration unit (55) suitable for registering the terminal with the item of network equipment when the terminal is in the first network, and providing said item of network equipment with an MAC address of the terminal;
- a transmission unit (56) suitable for transmitting, to the item of network equipment via the second network, a remote access request (31) indicating access information; and
- a reception unit (57) suitable for receiving, from the item of network equipment via the second network, a message indicating whether the terminal is authorized to access the first network remotely,
said terminal being **characterized in that** said access information includes a first parameter corresponding to said MAC address of the terminal and a second parameter corresponding to a WEP key of the item of network equipment (10).

10. Terminal (14) according to Claim 9, wherein the terminal has an MAC address of the item of network equipment (10);
wherein the transmission unit is also suitable for transmitting to a DNS platform (41) an address request (43) indicating the MAC address of the item of network equipment (10); and
wherein the reception unit is suitable for receiving a response (46) indicating an IP address of the item of network equipment.

11. System for managing remote access to a first network (11) via a second network (13) for a terminal (14) according to Claim 9;
said first network being connected to the second network via an item of network equipment (10) according to Claim 7.

12. Computer program designed to be stored in a memory of an item of network equipment (10) according to Claim 7, or on a removable memory medium and designed to interact with a drive of said item of network equipment, said computer program comprising instructions for applying the steps of the method according to Claim 1.

13. Computer program designed to be stored in a memory of a terminal (14) according to Claim 9, or on a removable memory medium and designed to interact with a drive of said terminal, said computer program comprising instructions for applying the steps of the method according to Claim 5.

## Patentansprüche

1. Verfahren für das Management des Fernzugriffs für ein Endgerät (14) auf ein erstes Netz (11) über ein zweites Netz (13); wobei das erste Netz mit dem zweiten Netz über eine Netzanlage (10) verbunden ist;
wobei das Verfahren die folgenden Schritte umfasst, die auf Höhe der Netzanlage ausgeführt werden:
/1/ Empfangen (21) einer Fernzugriffsanforderung (31) auf das erste Netz, die Zugriffsinformationen angibt, von dem Endgerät über das zweite Netz;
/2/ Entscheiden, ob das Endgerät berechtigt ist, einen Fernzugriff auf das erste Netz vorzunehmen, anhand der Zugriffsinformationen; und
/3/ Senden einer Nachricht, die angibt, ob das Endgerät berechtigt ist, einen Fernzugriff auf das erste Netz vorzunehmen, zu dem Endgerät über das zweite Netz,
wobei das Verfahren **dadurch gekennzeichnet ist, dass** die Zugriffsinformationen einen ersten Parameter, der einer MAC-Adresse des Endgeräts entspricht, und einen zweiten Parameter, der einem WEP-Schlüssel der Netzanlage (10) entspricht, enthalten.

2. Fernzugriffmanagementverfahren nach Anspruch 1, wobei die Netzanlage (10), die im ersten Netz (11) einen Dienst anbietet, den Dienst über das zweite Netz (13) dem Endgerät anbietet, das berechtigt ist, einen Fernzugriff auf das erste Netz vorzunehmen.

3. Fernzugriffmanagementverfahren nach Anspruch 1, wobei die Netzanlage (10) eine Liste managt, die jedem registrierten Endgerät entsprechende Zugriffsinformationen zuordnet; und
wobei im Schritt /2/ die Netzanlage entscheidet, dass das Endgerät berechtigt ist, auf das erste Netz zuzugreifen, wenn die in der Fernzugriffsanforderung angegebenen Zugriffsinformationen den Zugriffsinformationen entsprechen, die dem Endgerät in der Liste zugeordnet sind.

4. Fernzugriffmanagementverfahren nach Anspruch 1, wobei sich die Netzanlage (10) bei einem DNS-Server registriert, indem sie eine Registrierungsanforderung (43), die eine MAC-Adresse der Netzanlage angibt, sendet.

5. Verfahren für das Management eines Fernzugriffs für ein Endgerät (14) auf ein erstes Netz (11) über ein zweites Netz (13);
wobei das erste Netz mit dem zweiten Netz über eine Netzanlage (10) verbunden ist;
wobei das Verfahren die folgenden Schritte umfasst, die auf Höhe des Endgeräts ausgeführt werden:
/1/ Senden einer Fernzugriffsanforderung (31), die Zugriffsinformationen angibt, zu der Netzanlage über das zweite Netz; und
/2/ Empfangen einer Nachricht, die angibt, ob das Endgerät berechtigt ist, einen Fernzugriff auf das erste Netz vorzunehmen, von der Netzanlage über das zweite Netz;
wobei das Verfahren **dadurch gekennzeichnet ist, dass** die Zugriffsinformationen einen ersten Parameter, der einer MAC-Adresse des Endgeräts entspricht, und einen zweiten Parameter, der einem WEP-Schlüssel der Netzanlage (10) entspricht, enthalten.

6. Fernzugriffmanagementverfahren nach Anspruch 5, wobei das Endgerät (14) eine MAC-Adresse der Netzanlage (10) besitzt, wobei das Steuerverfahren vor dem Schritt /1/ die folgenden Schritte umfasst, die auf Höhe des Endgeräts ausgeführt werden:
/i/ Senden einer Adressenanforderung (43), die eine MAC-Adresse der Netzanlage (10) angibt, zu einer DNS-Plattform (41);
/ii/ Empfangen einer Antwort (46), die eine IP-Adresse der Netzanlage angibt.

7. Netzanlage (10) in einem System für das Management eines Fernzugriffs für ein Endgerät (14) auf ein erstes Netz (11) über ein zweites Netz (13);
wobei die Netzanlage das erste Netz mit dem zweiten Netz verbindet;
wobei die Netzanlage (10) Folgendes umfasst:
- eine Registrierungseinheit (51), die dazu ausgelegt ist, eine MAC-Adresse des Endgeräts zu registrieren, wenn sich das Endgerät im ersten Netz befindet;
- eine Empfangseinheit (52), die dazu ausgelegt ist, von dem Endgerät über das zweite Netz eine Zugriffsanforderung (31) zu empfangen (21), die Zugriffsinformationen angibt;
- eine Entscheidungseinheit (53), die dazu ausgelegt ist, anhand der Zugriffsinformationen zu entscheiden, ob das Endgerät berechtigt ist, einen Zugriff auf das erste Netz vorzunehmen; und
- eine Sendeeinheit (54), die dazu ausgelegt ist, zu dem Endgerät über das zweite Netz eine Nachricht zu senden, die angibt, ob das Endgerät berechtigt ist, auf das erste Netz zuzugreifen,
wobei die Netzanlage **dadurch gekennzeichnet ist, dass** die Zugriffsinformationen einen ersten Parameter, der der MAC-Adresse des Endgeräts entspricht, und einen zweiten Parameter, der einem WEP-Schlüssel der Netzanlage (10) entspricht, enthalten.

8. Netzanlage (10) nach Anspruch 7, die außerdem Mittel umfasst, die dazu ausgelegt sind, eine Liste zu managen, die jedem registrierten Endgerät jeweilige Zugriffsinformationen zuordnet; und
wobei die Entscheidungseinheit (53) entscheidet, dass das Endgerät berechtigt ist, auf das erste Netz zuzugreifen, wenn die in der Fernzugriffsanforderung angegebenen Zugriffsinformationen den Zugriffsinformationen entsprechen, die dem Endgerät in der Liste zugeordnet sind.

9. Endgerät (14) in einem System zum Steuern eines Fernzugriffs auf ein erstes Netz (11) über ein zweites Netz (13);
wobei das erste Netz mit dem zweiten Netz über eine Netzanlage (10) verbunden ist;
wobei das Endgerät Folgendes umfasst:
- eine Registrierungseinheit (55), die dazu ausgelegt ist, das Endgerät bei der Netzanlage zu registrieren, wenn sich das Endgerät in dem ersten Netz befindet, indem sie zu der Netzanlage eine MAC-Adresse des Endgeräts liefert;
- eine Sendeeinheit (56), die dazu ausgelegt ist, über das zweite Netz zu der Netzanlage eine Fernzugriffsanforderung (31) zu senden, die Zugriffsinformationen angibt; und
- eine Empfangseinheit (57), die dazu ausgelegt ist, von der Netzanlage über das zweite Netz eine Nachricht zu empfangen, die angibt, ob das Endgerät berechtigt ist, einen Fernzugriff auf das erste Netz vorzunehmen,
wobei das Endgerät **dadurch gekennzeichnet ist, dass** die Zugriffsinformationen einen ersten Parameter, der der MAC-Adresse des Endgeräts entspricht, und einen zweiten Parameter, der einem WEP-Schlüssel der Netzanlage (10) entspricht, enthalten.

10. Endgerät (14) nach Anspruch 9, wobei das Endgerät eine MAC-Adresse der Netzanlage (10) besitzt;
wobei die Sendeeinheit außerdem dazu ausgelegt ist, zu einer DNS-Plattform (41) eine Adressenanforderung (43) zu senden, die die MAC-Adresse der Netzanlage (10) angibt; und
wobei die Empfangseinheit dazu ausgelegt ist, eine Antwort (46) zu empfangen, die eine IP-Adresse der Netzanlage angibt.

11. System zum Steuern eines Fernzugriffs auf ein erstes Netz (11) über ein zweites Netz (13) für ein Endgerät (14) nach Anspruch 9,
wobei das erste Netz mit dem zweiten Netz über eine Netzanlage (10) nach Anspruch 7 verbunden ist.

12. Computerprogramm, das dazu bestimmt ist, in einem Speicher einer Netzanlage (10) nach Anspruch 7 oder in einem entnehmbaren Speicherträger, der dazu bestimmt ist, mit einem Lesegerät der Netzanlage zusammenzuwirken, gespeichert zu sein, wobei das Computerprogramm Befehle für die Ausführung der Schritte des Verfahrens nach Anspruch 1 enthält.

13. Computerprogramm, das dazu bestimmt ist, in einem Speicher eines Endgeräts (14) nach Anspruch 9 oder in einem entnehmbaren Speicherträger, der dazu bestimmt ist, mit einem Lesegerät des Endgeräts zusammenzuwirken, gespeichert zu sein, wobei das Computerprogramm Befehle für die Ausführung der Schritte des Verfahrens nach Anspruch 5 enthält.
